# EUROPEAN PATENT APPLICATION

(11) **EP 4 678 945 A1**
(43) Date of publication of application: **14.01.2026**
(21) Application number: 24306143.9
(22) Date of filing: 08.07.2024
(51) Int. Cl.: F16H 57/04, F16H 57/031

(54) **GEARBOX, CORRESPONDING USE AND VEHICLE**

(71) Applicant: ALSTOM Holdings, 93400 Saint-Ouen-sur-Seine (FR)
(72) Inventor: SEMERAD, Horst, 2340 MÖDLING (AT); KUBIS, Marek, 841 06 BRATISLAVA (SK)
(74) Representative: Plasseraud IP

(57) **Abstract**

A gearbox configured to be used in the transmission of a rail vehicle, the gearbox configured to be a plunge-lubricated gearbox using oil as lubricant, the gearbox comprising at least one filter element, wherein the gearbox is configured to be a gearbox with a shaft for distributing the oil to different bearings of the gearbox, and characterized in that the at least one filter element is configured to be placed in the shaft and through which the oil is transported.

## Description

The present invention relates in particular to a plunge-lubricated gearbox using oil as lubricant whereby the gearbox may be a gearbox with an shaft and whereby the oil is running through the shaft. The shaft may be an intermediate shaft. The gearbox can be used especially in the transmission of a rail vehicle.

The present invention correspondingly concerns a gearbox which can be configured to be used in a vehicle, the gearbox configured to be a plunge-lubricated gearbox using oil as lubricant, the gearbox comprising at least one filter element, wherein the gearbox is configured to be a gearbox with a shaft for distributing the oil to different bearings of the gearbox, and characterized in that the at least one filter element is configured to be placed in the shaft and through which the oil is transported.

According to another aspect, the present invention relates to a use of the gearbox for filtering oil being a lubricant in the gearbox.

Furthermore, the present invention concerns the use of the gearbox for transmission of a rail vehicle.

Further, the invention relates to a vehicle comprising a motor and a gearbox.

Generally, oil is used as a lubricant in gearboxes to prolong the lifetime of the gearbox. The oil however gets dirty during the operation of the gearbox. But only clean oil protects gear teeth and bearings. Therefore, it is necessary to change the oil in intervals of the lifetime of the gearbox.

In order to solve such a problem, it has been proposed to use oil filtering in combustion engines.

RU2754789C2 for example concerns a gearbox, primarily for transmission of a rail vehicle displaying an oil filter.

WO2018166992A1 describes a transmission in particular for the powertrain of rail vehicles also showing such an oil filter.

EP4137677A1 shows a lubricant filter for a turbine engine.

The goal of this invention is thus to provide a gearbox for filtering oil being a lubricant in said gearbox, in particular for the transmission of a rail vehicle.

To this end, the present invention relates to a gearbox which can be configured to be used in the transmission of a rail vehicle, wherein at least one filter element is configured to be placed in the shaft and through which the oil is transported.

As a result the lubricant oil is filtered and distributed across the gearbox, such that the cleansed oil protects the gear teeth and bearings and leading to an increased lifetime of the gearbox and shorter maintenance intervals.

The invention in particular has a positive impact to increase the bearing lifetime and the negative influence of foreign debris will be reduced dramatically. Failure on gears can thus be excluded and pre-damages on the gear teeth will not occur due to foreign debris. Further, the invention is saving material and is protecting environment resources.

According to one aspect of the present invention in agreement with a first embodiment the gearbox can be configured to be used in a vehicle, and the gearbox can be configured to be a plunge-lubricated gearbox using oil as lubricant, the gearbox comprising at least one filter element, wherein the gearbox is configured to be a gearbox with a shaft for distributing the oil to different bearings of the gearbox, and characterized in that the at least one filter element is configured to be placed in the shaft and through which the oil is transported.

Further embodiments of the gearbox according to the invention may relate to one or more of the following features, which may be combined in any technical feasible combination:
- the gearbox is a two-stage gearbox, or a single-stage gearbox with or without an idler gear, or a three-stage gearbox.
- the at least one filter element is configured to be arranged in the radial center of the shaft.
- the at least one filter element is configured to be arranged in the axial center of the shaft.
- the gearbox comprises a thrust washer, wherein the filter element is configured to be fixed by the thrust washer.
- the thrust washer is equipped with a central hole.
- at least one filter element is configured to be fixed with a circlip system.
- the gearbox comprises at least one oil groove configured to transport the oil to the bearing points on the side of the gearbox, if the at least one filter element is dirty.
- the gearbox is configured to be mounted on the bogie of a rail vehicle.

According to two other aspects, the present invention relates to a use of the gearbox for filtering oil being a lubricant in the gearbox and for the transmission of a rail vehicle.

Finally, the present invention concerns a vehicle comprising a motor and the gearbox wherein the vehicle can be a rail vehicle.

The accompanying drawings relate to embodiments of the invention and are described in the following:
Fig. 1 is an overview of the existing architecture of a gearbox adapted for the smallest installation space.
Fig. 2 is a sectional view of the existing subsystems / components of a gearbox according to the state of the art.
Fig. 3 shows schematically a vertical section cut of the gearbox according to the present invention.
Fig. 4 displays schematically a section cut through the gearbox according to the present invention with the left oil supply.
Fig. 5 shows schematically a section cut through gearbox according to the present invention with the right oil supply.

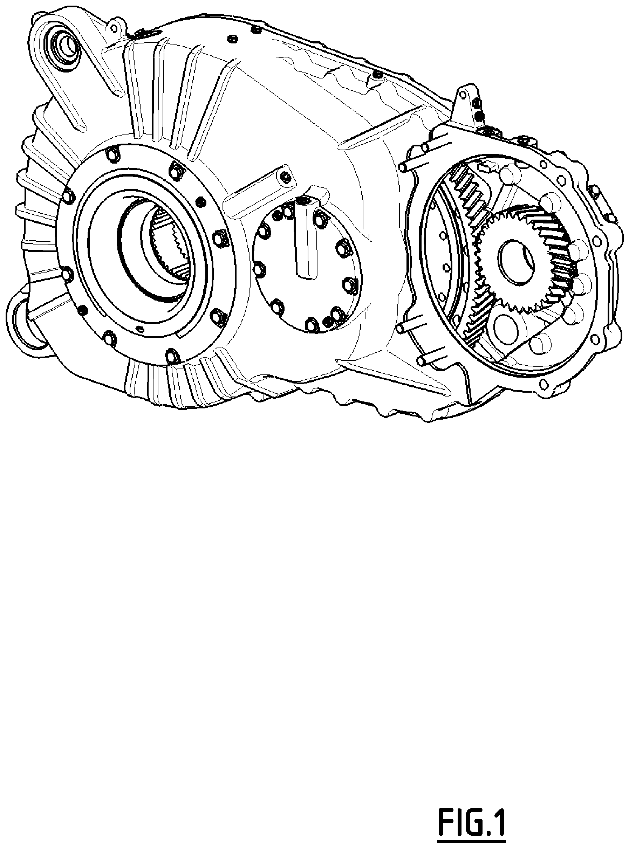

Fig. 1 provides an overview of the existing architecture at the system level of the environment of the invention. The exemplary 2-stage gearbox FU4000 exhibits an intermediate distribution shaft dispensing the oil. This solution is adapted for the smallest installation space.

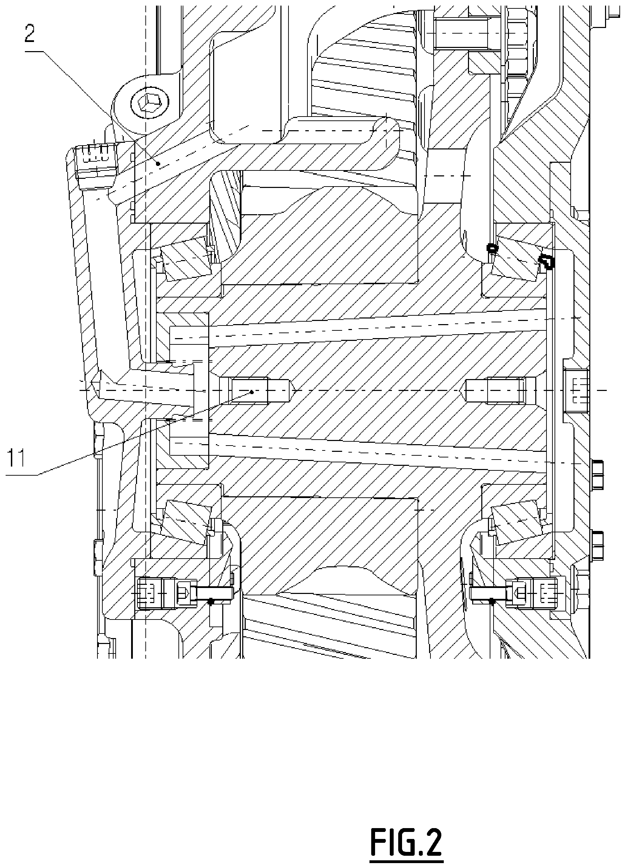

Fig. 2 shows the existing Subsystems / Components of a state of the art gearbox. It exhibits the shaft 11 in the center of the image, distributing the oil by the oil feeder, taken from the distribution chamber. The shaft 11 may be an intermediate shaft. Transport holes for the oil distribution to the bearings are located on both ends of the shaft 11.

The oil in the oil sump is distributed by the rotation of the gears in the transmission housing and then collected in oil pockets in the upper area. Then the oil comes from these pockets on the top side of the shaft 11 and floats in the distribution chamber. In the distribution chamber the oil should go 50% to each side of the gearbox to the tapered bearings. Due to the rotation of the shaft 11 and the effect of the centrifugal force on the oil, the oil is transported to the outside through the inclined bores. The higher the speed, the faster the oil is transported through these bores to the bearing points.

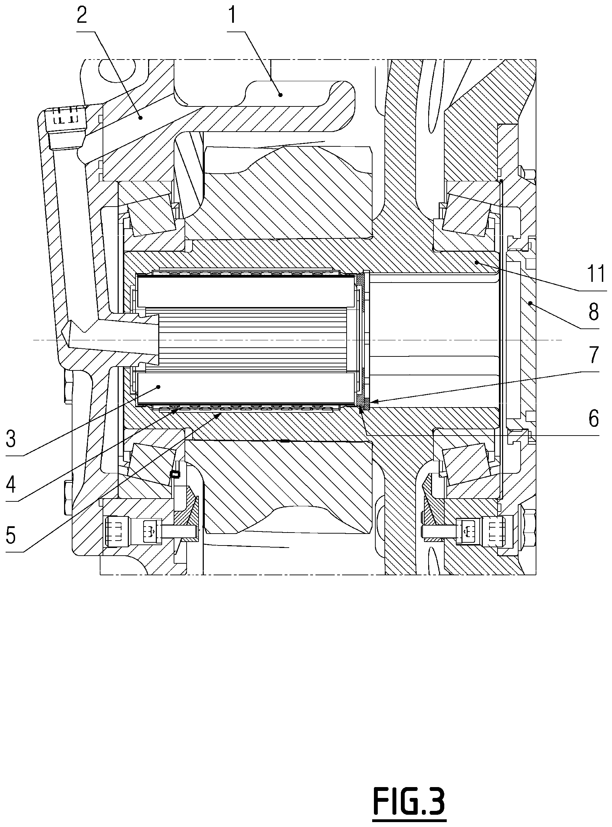

Fig. 3 demonstrates the gearbox of the present invention according to a first embodiment. Fig. 3 correspondingly displays schematically a vertical section cut of the gearbox according to the present invention. According to this embodiment, the gearbox may be configured to be a plunge-lubricated gearbox using oil as lubricant and being configured to be mounted on the bogie of a rail vehicle.

The gearbox in this embodiment may be configured to be a two-stage gearbox with a shaft 11 for distributing the oil to the different bearings of the gearbox.

The at least one filter element 3 may be an oil filter cartridge. The at least one filter element 3, in particular the oil filter cartridge may, according to this embodiment, be configured to be placed in the shaft 11 and through which the oil is transported.

The oil distribution chamber is removed and replaced by the filter element 3, which is pushed form the side. A thrust washer, which can be an oil retaining washer 6 with an overflow hole is used next to the filter element 3. Then a circlip is used to hold the two parts in place. If the filter element 3 is not replaced at the scheduled time, or if the filter becomes dirty very quickly, there is no risk of an oil backlog. For this purpose, the thrust washer 6 is equipped with a central hole.

On the other side, oil grooves below the oil filter element 3 help to transport the oil directly to the bearing points on the left side 9, if the filter element 3 is dirty. In the present case, four oil grooves are present. The gearbox may comprise at least one such oil groove, or more than one oil groove, for example at least two oil grooves or at least three oil grooves. Directly means in the present case that the bearing points are neighboring the filter element 3, such that the oil can pass directly from the filter element 3 to the bearing points 9. "Left" designates the orientation as seen from the side of the oil draining hole along the axis of rotation of the shaft 11 with the oil collection pan on the top.

The oil is then again collected in an oil collection pan 1. From there it is draining to an oil drain hole 2 towards the shaft 11. There it reaches at least one filter element 3, e.g. the oil filter cartridge, again. Passing through the perforated safety sheet 4 it is then collected in the oil collection space 5 before reaching once again the oil-retaining washer 6.

A retaining ring 7 is fixing the oil filter element 3. A maintenance cover 8 allows maintaining the shaft 11. The maintenance cover 8 is mounted on the opposite side from the oil filter element 3 and draining hole 2.

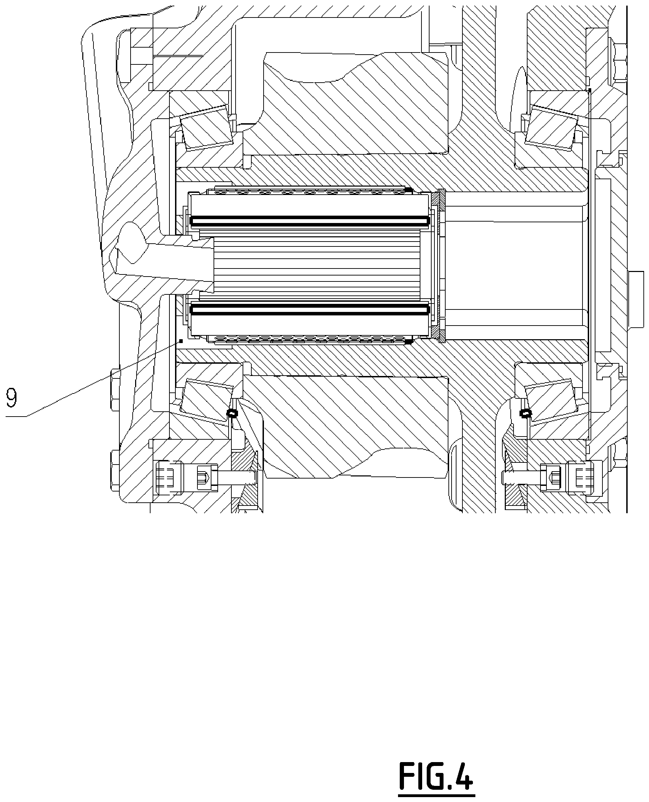

Fig. 4 shows the case of the left oil supply of the gearbox of the present invention according to this first embodiment. Additionally to the elements displayed in Fig. 3, Fig 4 exhibits the oil supply left bearing 9 supporting the oil filter element 3, i.e. the oil filter cartridge .

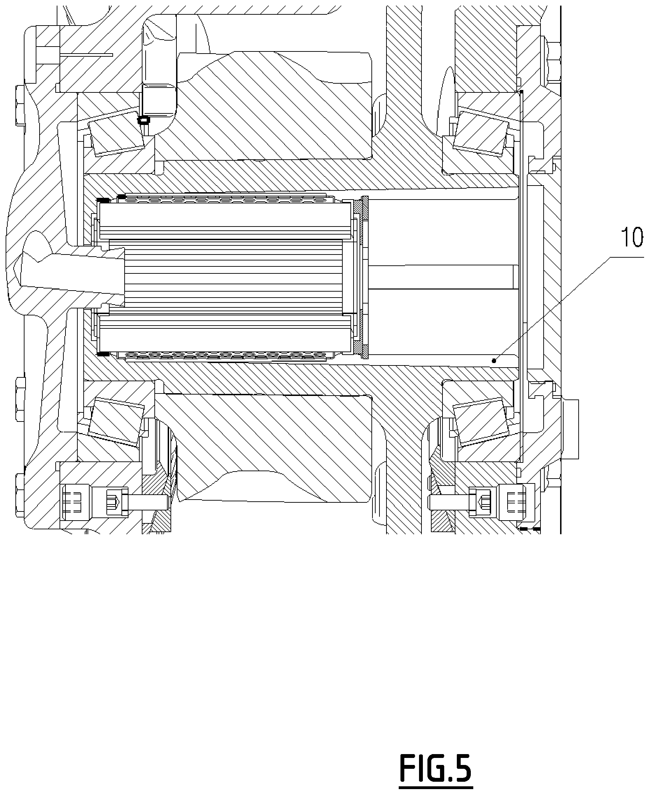

Fig. 5 displays the case of the right oil supply of the gearbox of the present invention according to this first embodiment.

The right side is the opposite side to the left side, i.e. "right" designates the orientation as seen from the side of the oil draining hole 2 along the axis of rotation of the shaft 11 with the oil collection pan on the top.

Additionally to the elements shown in Figs. 3 and 4, Fig. 5 exhibits the oil supply right bearing 10 supporting the oil filter element 3.

According to another embodiment the at least one filter element 3 may be configured to be arranged in the center of the shaft 11 and may be fixed with a thrust washer 6 wherein the thrust washer 6 may be equipped with a central hole.

In another variant, the oil collection pan 1 is placed on top of the gearbox.

At least one filter element 3 may be arranged at the bottom of the shaft 11, such that the oil is running by gravity automatically from the oil collection pan 1 through the oil drain hole 2 to the oil collection space 5 passing by the filter element 3 and then the perforated safety sheet 4.

According to further embodiments, at least one filter element 3 may be configured to be fixed with a circlip system.

In another variant, the gearbox and at least one filter element 3 may be configured to transport the oil directly, i.e. passing directly from the filter element 3 to the neighboring bearing points 9 on the left side as seen in Fig. 4 of the gearbox, if the filter element 3 is dirty.

The gearbox may be a two-stage gearbox, i.e. comprising two stages, but not more than two stages. It may also be a multiple-stage gearbox having more than two stages. Alternatively, according to a not represented variant, the gearbox may be a single-stage gearbox. In this case, the gearbox may be adapted to house a single-stage gear train with or without an idler gear, i.e. a gear train having exactly two gears or having two gears and an idler gear interposed between said two gears. Further alternatively, according to a not represented variant gearbox may be a three-stage gearbox.

In case the gearbox is adapted to house a single-stage gear train without an idler gear, the shaft 11 which is configured so that the filter element 3 may be placed in the shaft as explained above, is the pinion shaft.

The at least one filter element 3 may be configured to be arranged in the radial center of the shaft 11. The at least one filter element 3 may also be configured to be arranged in the axial center of the shaft 11. The at least one filter element 3 may be a bypass filter and/or a centrifugal oil cleaner and/or a centrifugal oil cleaner.

The gearbox may comprise a thrust washer 6, wherein the filter element 3 is configured to be fixed by the thrust washer 6. The thrust washer 6 may be equipped with a central hole.

The filter element 3 may be configured to be fixed with a circlip. The gearbox may comprise at least four oil grooves, which may be configured to transport the oil to the bearing points 9 and 10 on the side of the gearbox, in case the filter is dirty and clogged-up. As stated above other numbers of such oil grooves are possible. The transportation can be immediate, the oil directly passing from the filter element 3 to the neighboring bearing points 9 or 10 on the left or right side, respectively.

The gearbox may be configured to be mounted on a bogie of a rail vehicle. The bogie may be an articulated bogie, a radial or a non-radial bogie.

According a further aspect, the present invention relates to a use of the gearbox for filtering oil being a lubricant in the gearbox.

In another embodiment, the present invention relates to a use for the transmission of a rail vehicle. The transmission can be fixed-ratio or mutli-ratio. The multi-ratio transmission can be any transmission of manual, sequential manual, automatic, semi-automatic or hydraulic automatic transmission. Further, it can be dual-clutch, continuously variable, automated manual or clutchless manual transmission.

Finally, the present invention concerns a vehicle comprising a motor and the gearbox wherein the vehicle can be a rail vehicle. The motor of the rail vehicle can be an electric motor.

## Claims

1. Gearbox configured to be used in a vehicle,
- the gearbox being configured to be a plunge-lubricated gearbox using lubrication oil as lubricant,
- the gearbox comprising at least one filter element (3),
- wherein the gearbox is configured to be a gearbox with a shaft (11) for distributing the oil to different bearings (10) of the gearbox, and
**characterized in that** the shaft (11) and the filter element (3) are configured so that the filter element may be placed in the shaft and so that the lubrication oil may be transported through the filter element.

2. Gearbox according to claim 1 wherein the gearbox is a two-stage gearbox, or a single-stage gearbox with or without an idler gear, or a three-stage gearbox.

3. Gearbox according to claim 1 or 2 wherein the at least one filter element is configured to be arranged in a radial center of the shaft.

4. Gearbox according to any one of the preceding claims 1 to 3 wherein the at least one filter element (3) is configured to be arranged in an axial center of the shaft (11).

5. Gearbox according to any one of the preceding claims 1 to 4 comprising a thrust washer (6), wherein the at least one filter element (3) is configured to be fixed by the thrust washer.

6. Gearbox according to claim 5 wherein the thrust washer (6) is equipped with a central hole.

7. Gearbox according to any one of the preceding claims 1 to 6 wherein the at least one filter element (3) is configured to be fixed with respect to the shaft (11) with a circlip.

8. Gearbox according to any one of the preceding claims 1 to 7 comprising at least one oil groove, in particular at least two or three or four oil grooves, configured to transport the oil to bearing points on the side of the gearbox, if the at least one filter element (3) is dirty.

9. Gearbox according to any one of the preceding claims 1 to 8 being configured to be mounted on a bogie of a rail vehicle

10. Use of a gearbox according to any one of the preceding claims 1 to 9 for filtering lubrication oil in the gearbox.

11. Use of a gearbox according to any one of the preceding claims 1 to 9 in a transmission of a rail vehicle.

12. Vehicle comprising a motor and a gearbox according to any one of the preceding claims 1 to 9.

13. Vehicle according to claim 12 wherein the vehicle is a rail vehicle.
